(19) Europäisches Patentamt
European Patent Office
Office européen des brevets

(11) EP 3 240 301 A1

(12) **EUROPEAN PATENT APPLICATION**
published in accordance with Art. 153(4) EPC

(43) Date of publication:
**01.11.2017 Bulletin 2017/44**

(21) Application number: **15872280.1**

(22) Date of filing: **24.12.2015**

(51) Int Cl.:
***H04R 3/00*** *(2006.01)* ***G10L 15/20*** *(2006.01)*
***G10L 15/28*** *(2013.01)* ***H04R 1/02*** *(2006.01)*
***H04R 1/40*** *(2006.01)* ***G10L 15/00*** *(2013.01)*

(86) International application number:
**PCT/JP2015/006446**

(87) International publication number:
**WO 2016/103709 (30.06.2016 Gazette 2016/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.12.2014 JP 2014263918**

(71) Applicant: **Aisin Seiki Kabushiki Kaisha**
**Kariya-shi, Aichi 448-8650 (JP)**

(72) Inventor: **VRAZIC, Sacha**
**Kariya-shi,**
**Aichi-ken 448-8650 (JP)**

(74) Representative: **Intès, Didier Gérard André et al**
**Cabinet Beau de Loménie**
**158 rue de l'Université**
**75340 Paris Cedex 07 (FR)**

# (54) VOICE PROCESSING DEVICE

(57) A voice processing device includes plural microphones 22 disposed in a vehicle, a voice source direction determination portion 16 determining a direction of a voice source by handling a sound reception signal as a spherical wave in a case where the voice source serving as a source of a voice included in the sound reception signal obtained by each of the plural microphones is disposed at a near field, the voice source direction determination portion determining the direction of the voice source by handling the sound reception signal as a plane wave in a case where the voice source is disposed at the far field, and a beamforming processing portion 12 performing beamforming so as to suppress a sound arriving from a direction range other than a direction range including the direction of the voice source.

FIG. 2

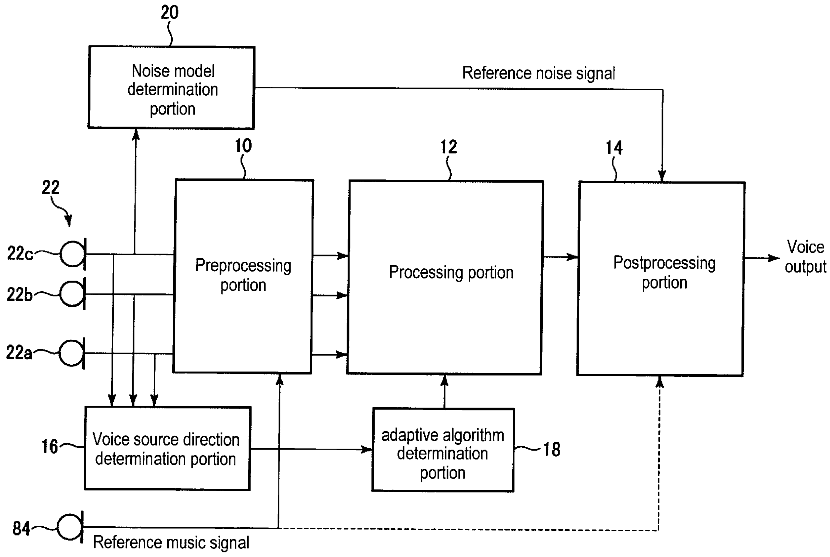




Printed by Jouve, 75001 PARIS (FR)

## Description

TECHNICAL FIELD

The present invention relates to a voice processing device.

BACKGROUND ART

Various devices are mounted on a vehicle, for example, an automobile. These various types of devices are operated by, for example, the operation of an operation button or an operation panel.

Meanwhile, recently, a technology of voice recognition is proposed (Patent documents 1 to 3).

DOCUMENT OF PRIOR ART

PATENT DOCUMENT

Patent document 1: JP2012-215606A

Patent document 2: JP2012-189906A

Patent document 3: JP2012-42465A

OVERVIEW OF INVENTION

PROBLEM TO BE SOLVED BY INVENTION

However, various noises exist in the vehicle. Accordingly, a voice that is generated in the vehicle is not easily recognized.

An object of the present invention is to provide a favorable voice processing device which may enhance a certainty of voice recognition.

MEANS FOR SOLVING PROBLEM

According to an aspect of this disclosure, a voice processing device is provided, the voice process device including plural microphones disposed in a vehicle, a voice source direction determination portion determining a direction of a voice source by handling a sound reception signal as a spherical wave in a case where the voice source serving as a source of a voice included in the sound reception signal obtained by each of the plurality of microphones is disposed at a near field, the voice source direction determination portion determining the direction of the voice source by handling the sound reception signal as a plane wave in a case where the voice source is disposed at the far field, and a beamforming processing portion performing beamforming so as to suppress a sound arriving from a direction range other than a direction range including the direction of the voice source.

EFFECT OF INVENTION

According to the present invention, in case where a voice source is positioned at a near field, the direction of the voice source may be highly precisely determined even in a case where the voice source is disposed at the near field since the voice is handled as the spherical wave. The direction of the voice source may be highly precisely determined, and thus, according to the present invention, a sound other than a target sound may be securely restrained. Furthermore, in a case where the voice source is disposed at the far field, the direction of the voice source is determined such that the voice is handled as the plane wave, and thus the processing load for determining the direction of the voice source may be reduced. Accordingly, according to the present invention, the favorable voice processing device that may enhance the certainty of the voice recognition may be provided.

BRIEF DESCRIPTION OF DRAWINGS

[Fig. 1] is a view schematically illustrating a configuration of a vehicle;
[Fig. 2] is a block diagram illustrating a system configuration of a voice processing device of an embodiment of the present invention;
[Fig. 3A] is a view schematically illustrating an example of a disposition of microphones in a case where the three microphones are provided;
[Fig. 3B] is a view schematically illustrating an example of the disposition of the microphones in a case where the two microphones are provided;
[Fig. 4A] is a view illustrating a case where a voice source is disposed at a far field;
[Fig. 4B] is a view illustrating a case where the voice source is disposed at a near field;
[Fig. 5] is a view schematically illustrating an algorithm of removal of music;
[Fig. 6] is view illustrating a signal wave before and after the removal of music;
[Fig. 7] is a view illustrating an algorithm of a determination of a direction of the voice source;
[Fig. 8A] is a view illustrating an adaptive filter coefficient;
[Fig. 8B] is a view illustrating a direction angle of the voice source;
[Fig. 8C] is a view illustrating an amplitude of a voice signal:
[Fig. 9] is a view conceptually illustrating a directivity of a beamformer;
[Fig. 10] is a view illustrating an algorithm of the beamformer;
[Fig. 11] is a graph illustrating an example of the directivity gained by the beamformer;
[Fig. 12] is a view illustrating an angle characteristic in a case where the beamformer and a cancellation process of the voice source direction determination;

[Fig. 13] is a graph illustrating an example of the directivity gained by the beamformer;

[Fig. 14] is a view illustrating an algorithm of the removal of noise;

[Fig. 15] is a view illustrating a signal wave before and after the removal of the noise; and

[Fig. 16] is a flowchart illustrating an operation of a voice processing device of an embodiment of the present invention.

MODE FOR CARRYING OUT THE INVENTION

Hereinafter, an embodiment of the present invention will be explained with reference to the drawings. However, the present invention is not limited to the embodiment disclosed hereunder, and may be appropriately changed within a scope without departing from the spirit of the present invention. In addition, in the drawings explained hereinunder, the same reference numerals are provided for components having the same function, and the explanation of the components may be omitted or may be simplified.

[An embodiment]

A voice processing device of an embodiment of the present invention will be explained with reference to Figs. 1 to 17.

A configuration of a vehicle will be explained with reference to Fig. 1 before explaining the voice processing device of the embodiment. Fig. 1 is a view schematically illustrating the configuration of the vehicle.

As shown in Fig. 1, a driver seat 40 serving as a seat for a driver and a passenger seat 44 serving as a seat for a passenger are disposed at a front portion of a vehicle body (a vehicle compartment) 46 of a vehicle (an automobile). The driver seat 40 is disposed at, for example, a right side of the vehicle compartment 46. A steering wheel (handle) 78 is provided at a front of the driver seat 40. The passenger seat 44 is disposed at, for example, a left side of the vehicle compartment 46. A front seat is configured with the driver seat 40 and the passenger seat 44. A voice source 72a is disposed in the vicinity of the driver seat 40 in a case where the driver speaks. A voice source 72b is disposed in the vicinity of the passenger seat 44 in a case where the passenger speaks. The position of the voice source 72 may change since the upper bodies of the driver and the passenger may move in a state of being seated on the seats 40, 44, respectively. A rear seat 70 is disposed at a rear portion of the vehicle body 46. Furthermore, here, in a case where an individual voice is explained without being distinguished, a reference numeral 72 is used, and in a case where the individual voice that is distinguished is explained, reference numerals 72a, 72b are used.

Plural microphones 22 (22a to 22c), in other words, a microphone array, are provided at a front of the front seats 40, 44. In addition, here, in a case where the individual microphones are explained without being distinguished, a reference numeral 22 is used. In a case where the individual microphones that are distinguished are explained, reference numerals 22a to 22c are used. The microphones 22 may be disposed at a dashboard 42, or may be disposed at a portion in the vicinity of a roof.

The distance between the voice sources 72 of the front seats 40, 44 and the microphones 22 is often dozens of centimeters. However, the microphones 22 and the voice source 72 of the front seats 40, 44 may often be spaced apart from each other by shorter than the dozens of centimeter. In addition, the microphones 22 and the voice source 72 may be spaced apart from each other by longer than one meter.

A speaker (a loud-speaker) 76 with which a speaker system of a vehicle-mounted audio device (a vehicle audio device) 84 (see Fig. 2) is configured is disposed inside the vehicle body 46. Music from the speaker 76 may be a noise when the voice recognition is performed.

An engine 80 for driving the vehicle is disposed at the vehicle body 46. Sound from the engine 80 may be a noise when the voice recognition is performed.

Sound generated in the vehicle compartment 46 by an impact of a road surface when the vehicle runs, that is, a road noise may be a noise when the voice recognition is performed. Furthermore, a wind noise generated when the vehicle runs may be a noise source when the voice recognition is performed. There may be noise sources 82 outside the vehicle body 46. Sounds generated from the outside noise sources 82 may be a noise when the voice recognition is performed.

It is convenient if the operation of various devices mounted on the vehicle 46 may be performed by a voice instruction. The voice instruction may be recognized by, for example, using an automatic voice recognition device which is not illustrated. The voice processing device of the present embodiment is contributed to the enhancement of the precision of the voice recognition.

Fig. 2 is a block diagram illustrating a system configuration of the voice processing device of the present embodiment.

As illustrated in Fig. 2, the voice processing device of the present embodiment includes a preprocessing portion 10, a processing portion 12, a postprocessing portion 14, a voice source direction determination portion 16, an adaptive algorithm determination portion 18, and a noise model determination portion 20.

The voice processing device of the present embodiment may further include an automatic voice recognition device which is not illustrated, or may be separately provided from the automatic voice recognition device. The device including these components and the automatic voice recognition device may be called as a voice processing device or an automatic voice recognition device.

The preprocessing portion 10 is inputted with signals obtained by plural microphones 22a to 22c, in other words, sound reception signals. For example, a non-directional microphone is used as the microphones 22.

Figs. 3A and 3B are views schematically illustrating examples of dispositions of the microphones. Fig. 3A shows a case where the three microphones 22 are provided, and Fig. 3B shows a case where the two microphones 22 are provided. The plural microphones 22 are provided so as to be disposed on a straight line.

Figs. 4A and 4B are figures illustrating cases where the voice sources are disposed at the far field and at the near field, respectively. Fig. 4A is the case where the voice source 72 is disposed at the far field, and Fig. 4B is the case where the voice source 72 is disposed at the near field. A character d shows a difference in distance from the voice source 72 to the microphones 22. A symbol $\theta$ shows an azimuth direction of the voice source 72.

As Fig. 4A shows, the voice arriving at the microphones 22 may be determined as a plane wave in a case where the voice source 72 is disposed at the far field. Accordingly, in the embodiment, in a case where the voice source 72 is disposed at the far field, the azimuth direction (the direction) of the voice source 72, in other words, the voice direction (Direction of Arrival, or DOA) is determined by handling the voice arriving at the microphones 22 as the plane wave. Since the voice arriving at the microphones 22 may be handled as the plane wave, the direction of the voice source 72 may be determined by using the two microphones 22 in a case where the voice source 72 is disposed at the far field. In addition, even in a case where the two microphones 22 are used, the direction of the voice source 72 that is disposed at the near field may be determined depending on the dispositions of the voice source 72 or of the microphones 22.

As illustrated in Fig. 4B, in a case where the voice source 72 is disposed at the near field, the voice arriving at the microphones 22 may be identified as a spherical wave. Thus, according to the embodiment, in a case where the voice source 72 is disposed at the near field, the voice arriving at the microphones 22 is handled as spherical wave, and the direction of the voice source 72 is determined. Because the voice arriving at the microphones 22 is required to be handled as the spherical wave, at least three microphones 22 are used to determine the direction of the voice source 72 in a case where the voice source 72 is disposed at the near field. Here, for simplifying the explanation, the case where the three microphones 22 are used will be explained as an example.

A distance L1 between the microphone 22a and the microphone 22b is set relatively long. A distance L2 between the microphone 22b and the microphone 22c is set relatively short.

The reason why the distance L1 and the distance 2 are different from each other in the embodiment will be described as follows. That is, in the embodiment, the direction of the voice source 72 is specified based on the voice arriving at the microphones 22 (Time Delay Of Arrival (TDOA) of the sound reception signal). Because the voice having a relatively low frequency includes a relatively long wavelength, it is favorable that the distance between the microphones 22 is set relatively large in order to support the voice which includes the relatively low frequency. Accordingly, in the embodiment, the distance L1 between the microphone 22a and the microphone 22b is set relatively long. On the other hand, because the voice which includes the relative high frequency includes a wavelength which is relatively short, it is favorable that the distance between the microphones 22 is set relatively short in order to support the voice which includes the relative high frequency. Thus, in the embodiment, the distance L2 between the microphone 22b and the microphone 22c is set relatively short.

The distance L1 between the microphone 22a and the microphone 22b corresponds to, for example, 5 centimeters in order to be favorable relative to the voice having the frequency of equal to or less than, for example, 3400 Hz. The distance L2 between the microphone 22b and the microphone 22c corresponds to, for example, 2.5 centimeters in order to be favorable relative to the voice having the frequency of greater than, for example, 3400 Hz. In addition, the distances L1, L2 are not limited thereto and may be appropriately set.

In the embodiment, the reason why the voice arriving at the microphones 22 is handled as the plane wave is that, in a case where the voice source 72 is disposed at the far field, the process for determining the direction of the voice source 72 is easier in a case where the voice is handled as the plane wave than a case where the voice is handled as the spherical wave. Accordingly, in the embodiment, in a case where the voice source 72 is disposed at the far field, the voice arriving at the microphones 22 is handled as the plane wave. Since the voice arriving at the microphones 22 is handled as the plane wave, the process load for determining the direction of the voice source 72 may be reduced in a case where the direction of the voice source 72 that is disposed at the far field is determined.

Although the process load for determining the direction of the voice source 72 is increased, the voice arriving at the microphones 22 is handled as the spherical wave in a case where the voice source 72 is disposed at the near field. This is because the direction of the voice source 72 may not be determined accurately if the voice arriving at the microphones 22 is not handled as the spherical wave in a case where the voice source 72 is disposed at the near field.

As such, in the present embodiment, in a case where the voice source 72 is disposed at the far field, the direction of the voice source 72 is determined by handling the voice as the plane wave. In a case where the voice source 72 is disposed at the near field, the direction of the voice source 72 is determined by handling the voice as the spherical wave.

As illustrated in Fig. 2, the sound reception signal obtained by the plural microphones 22 is inputted to the preprocessing portion 10. The preprocessing portion 10 performs a sound field correction. In the sound field correction, the tuning operation considering audio characteristics of the vehicle compartment 46 serving as the audio space is performed.

In a case where the sound reception signal obtained by the microphones 22 includes music, the preprocessing portion 10 removes the music from the sound reception signal obtained by the microphones 22. The preprocessing portion 10 is inputted with a reference music signal (a reference signal). The preprocessing portion 10 removes the music included in the sound reception signal obtained by the microphones 22 by using the reference music signal.

Fig. 5 is a view schematically illustrating an algorithm of a removal of music. In a case where the music plays by the vehicle-mounted audio device 84, the sound reception signal obtained by the microphones 22 includes music. The sound reception signal including the music obtained by the microphones 22 is inputted to a music removal processing portion 24 provided in the preprocessing portion 10. The reference music signal is inputted to the music removal processing portion 24. The reference music signal may be obtained by obtaining the music outputted from, for example, the speaker 76 of the vehicle-mounted audio device 84 by microphones 26a and 26b. A music source signal before converting into sound by the speaker 76 may be inputted to the music removal processing portion 24 as the reference music signal.

The output signal from the music removal processing portion 24 is inputted to a step-size determination portion 28 which is provided in the preprocessing portion 10. The step-size determination portion 28 determines a step size of the output signal of the music removal processing portion 24. The step size determined by the step-size determination portion 28 is feedbacked to the music removal processing portion 24. The music removal processing portion 24 removes the music from the signal including the music by algorithms of a normalized least square method (Normalized Least-Mean Square :NLMS) in the frequency range based on the step size determined by the step-size determination portion 28 by using the reference music signal. The sufficient processing stages are performed to process the removal of the music in order to sufficiently remove the reverberation component of the music inside the vehicle component 46.

Fig. 6 is a view illustrating a signal wave before and after the removal of the music. A lateral axis indicates a time and a longitudinal axis indicates an amplitude. A signal having a color of gray illustrates a state before the removal of the music. A signal having a color of black illustrates a state after the removal of the music. As seen from Fig. 6, the music is securely removed.

As such, the signal from which the music is removed is outputted from the music removal processing portion 24 of the preprocessing portion 10 and is inputted to the processing portion 12. Meanwhile, in a case where the music may not be removed sufficiently by the preprocessing portion 10, the postprocessing portion 14 may perform the removal process of the music.

The direction of the voice source is determined by a voice source direction determination portion 16. Fig. 7 is a view illustrating an algorithm of the determination of the direction of the voice source. The signal from the microphone 22 of the plural microphones 22 is inputted to a delay portion 30 provided in the voice source direction determination portion 16. The signals from the other microphones 22 of the plural microphones 22 are inputted to an adaptive filter 32 provided in the voice source direction determination portion 16. The output signals of the delay portion 30 and the output signals of the adaptive filter 32 are inputted to a subtraction point 34. In the subtraction point 34, the output signals of the adaptive filter 34 are subtracted from the output signals of the delay portion 30. Based on the signals in which the subtraction process is performed at the subtraction point 34, the adaptive filter 32 is adjusted. The output from the adaptive filter 32 is inputted to a peak detection portion 36. The peak detection portion 36 detects a peak (the maximum value) of adaptive filter coefficient. An arrival time difference $\tau$ supporting the peak of the adaptive filter coefficient corresponds to an arrival time difference $\tau$ supporting the arrival direction of a target sound. Accordingly, based on the arrival time difference $\tau$ that is calculated as above, the direction of the voice source 72, in other words, the arrival direction of the target sound may be determined.

Indicating c [m/s] as a sound speed, d [m] as the distance between the microphones, and $\tau$ [second] as the arrival time difference, a direction $\theta$[degree] of the voice source 72 may be expressed by a following formula (1). Meanwhile, the sound speed c is approximately 340 [m/s].

$$\theta=(180/\pi)\arccos(\tau \cdot c/d) \quad \cdots(1)$$

Fig. 8A is a view illustrating an adaptive filter coefficient. Fig. 8B is a view of a direction angle of the voice source. Fig. 8C is a view of the amplitude of the sound signal. In Fig. 8A, a part in which the adaptive filter coefficient comes to be a peak is applied with hatching pattern. Fig. 8B illustrates the direction of the voice source 72 determined based on the arrival time difference $\tau$. Fig. 8C illustrates the amplitude of the voice signal. Furthermore, Figs. 8A to 8C illustrate a case where the operator and the passenger speak alternately. Here, the direction of the voice source 72a in a case where the driver speaks corresponds to $\alpha$ 1. The direction of the voice source 72b in a case where the passenger speaks corresponds to $\alpha$ 2.

As illustrated in Fig. 8A, the arrival time difference $\tau$ may be detected based on the peak of the adaptive filter coefficient w(t, $\tau$). In a case where the driver speaks, the arrival time difference $\tau$ corresponding to the peak of the adaptive filter coefficient corresponds to, for example, approximately -tl. Then, in a case where the direction angle of the voice source 72a is determined based on the arrival time difference $\tau$, the direction angle of the voice source 72a is determined as, for example, $\alpha$ 1. Meanwhile, in a case where the passenger speaks, the arrival time difference $\tau$ corresponding to the peak of the adaptive filter coefficient corresponds to, for example, t2. In addition, in a case where the direction angle of the voice source 72b is determined based on the arrival time difference $\tau$, the direction angle of the voice source 72b is determined to be, for example, approximately $\alpha$ 2. Furthermore, here, an example in which the driver is disposed at the direction angle of $\alpha$ 1, and the passenger is disposed at $\alpha$ 2 is explained, however, is not limited thereto. Even in a case where the voice source 72 is disposed at the near field, or even in a case where the voice source 72 is disposed at the far field, the position of the voice source 72 may be specified based on the arrival time difference $\tau$. However, in a case where the voice source 72 is disposed at the near field, since, as described above, three or more microphones 22 are required, the process load for determining the direction of the voice source 72 increases.

The output signal of the voice source direction determination portion 16, in other words, the signal indicating the direction of the voice source 72 is inputted to the adaptive algorithm determination portion 18. The adaptive algorithm determination portion 18 determines the adaptive algorithm based on the direction of the voice source 72. The signals indicating the adaptive algorithm determined by the adaptive algorithm determination portion 18 is inputted to the processing portion 12 from the adaptive algorithm determination portion 18.

The processing portion 12 performs an adaptive beamforming that serves as a signal process forming a directivity adaptively (an adaptive beamformer). For example, a Frost beamformer may be used as a beamformer. The beamforming is not limited to the Frost beamformer, and may appropriately adapt various beamformers. The processing portion 12 performs the beamforming based on the adaptive algorithm determined by the adaptive algorithm determination portion 18. In the embodiment, performing beamforming is to decrease the sensitivity other than the arrival direction of the target sound while securing the sensitivity relative to the arrival direction of the target sound. The target sound is, for example, the voice generated by the driver. Because the driver may move his/her upper body in a state of being seated on the driver seat 40, the position of the voice source 72a may change. The arrival direction of the target sound changes in response to the change of the position of the sound source 72a. It is favorable that sensitivity other than the arrival direction of the target sound is securely decreased in order to perform the favorable voice recognition. Thus, in the embodiment, the beamformer is sequentially updated in order to suppress the voice from the direction range other than the direction range including the direction based on the direction of the voice source 72 determined as above.

Fig. 9 is a view schematically illustrating the directivity of the beamformer. Fig. 9 conceptually illustrates the directivity of the beamformer in a case where the voice source 72a that should be a target of the voice recognition is disposed at the driver seat 40. The hatching pattern in Fig. 9 shows the direction range where the arrival sound is suppressed (restrained, reduced). As illustrated in Fig. 9, the sound arriving from the direction range that is other than the direction range including the direction of the driver seat 40 is suppressed.

In a case where the voice source 72b that should be a target of the voice recognition is displaced at the passenger seat 44, the sound arriving from the direction range that is other than the direction range including the direction of the passenger seat 44 may be suppressed.

Fig. 10 is a view illustrating the algorithm of the beamformer. The sound reception signals obtained by the microphones 22a to 22c are inputted to window function / fast Fourier transform processing portions 48a to 48c, respectively, provided in the processing portion 12, via the preprocessing portion 10 (see Fig. 2). The window function/fast Fourier transform processing portions 48a to 48c perform the window function process and the fast Fourier transform process. In the embodiment, why the window function process and the fast Fourier transform process are performed is because the calculation in the frequency range is faster than the calculation in the time range. An output signal $X_{1,k}$ of the window function/fast Fourier transform processing portion 48a and a weight tensor $W_{1,k^*}$ of the beamformer are multiplied at a multiplication point 50a. An output signal $X_{2,k}$ of the window function/fast Fourier transform processing portion 48b and a weight tensor $W_{2,k^*}$ of the beamformer are multiplied at a multiplication point 50b. An output signal $X_{3,k}$ of the window function/fast Fourier transform processing portion 48c and a weight tensor $W_{3,k^*}$ of the beamformer are multiplied at a multiplication point 50c. The signals in which the multiplication process is performed at the multiplication points 50a to 50c are summed at a summing point 52. A signal $Y_k$ in which summation process is operated at the summing point 52 is inputted to a reverse fast Fourier transform/a superposition summation processing portion 54 being provided within the processing portion 12. The reverse fast Fourier transform/a superposition summation processing portion 54 operates a process by the reverse fast Fourier transform process and a superposition summation (OverLap-Add or OLA) method. By performing the process by the superposition summation method, the signal in the frequency range is returned to the signal of the time range. The signals in which the reverse fast Fourier transform process and the superposition summation method are operated are inputted to the postprocessing portion 14 from the reverse fast Fourier transform/the superposition summation processing portion 54.

Fig. 11 is a view illustrating a directivity (an angle characteristic) gained by the beamformer. A lateral axis indicates a direction angle and a longitudinal axis indicates an output signal power. As shown in Fig. 11, output signal power comes to be an ultrasmall at, for example, a direction angle $\beta 1$ and a direction angle $\beta 2$. Sufficient suppression is performed between the direction angle $\beta 1$ and the direction angle $\beta 2$. By using the beamformer that includes the directivity as shown in Fig. 11, the sound arriving from the passenger seat may be sufficiently suppressed. Meanwhile, the voice arriving from the driver seat arrives at the microphones 22 almost without being suppressed.

In the embodiment, in a case where the sound arriving from the direction range other than the direction range including the direction of the voice source 72 is greater than the voice arriving from the voice source 72, the determination of the direction of the voice source 72 is cancelled (a voice source direction determination cancellation process). For example, in a case where the beamformer is set so as to obtain the voice from the driver, and in a case where the voice from the passenger is larger than the voice from the driver, the estimation of the direction of the voice source is cancelled. In this case, the sound reception signal obtained by the microphones 22 is sufficiently suppressed. Fig. 12 is a view illustrating a directivity (an angle characteristic) in a case where the beamformer and the voice source direction determination cancellation process are combined. A solid line shows the directivity of the beamformer. An one-dotted chain line shows the angle characteristic of the voice source direction determination cancellation process. For example, a voice arriving from a direction smaller than $\gamma 1$, or, for example, a voice arriving from a direction lager than $\gamma 2$, is larger than the voice from the driver, the voice source direction determination cancellation process is operated. Furthermore, here, a case where the beamformer is set to obtain the voice from the driver, however, the beamformer may be set to obtain the voice from the passenger. In this case, in a case where the voice from the driver is larger than the voice from the passenger, the estimation of the determination of the direction of the voice source is cancelled.

Fig. 13 is a graph illustrating a directivity gained by the beamformer in a case where the two microphones are used. The lateral axis indicates a direction angle and the longitudinal axis indicates the output signal power. Because the two microphones 22 are used, an angle that comes to be an ultrasmall value is only at a point. As illustrated in Fig. 13, a strong suppression is available at, for example, the direction angle $\beta 1$, however, the robustness against the change of the direction of the voice source 72 is not so high.

As such, the signal in which the sound arrives from the direction range other than the direction range including the direction of the voice source 72 is outputted from the processing portion 12. The output signal from the processing portion 12 is inputted to the postprocessing portion 14.

The noise is removed at the postprocessing portion (a postprocessing application filter) 14. The noise may be, for example, an engine noise, a road noise, and a wind noise. Fig. 14 is a view illustrating an algorithm of the removal of the noise. A fundamental wave determination portion 56 provided in a noise model determination portion 20 determines a fundamental wave of the noise. The fundamental wave determination portion 56 outputs a sine wave based on the fundamental wave of the noise. The sine wave outputted from the fundamental wave determination portion 56 is inputted to a modeling processing portion 58 provided in the noise model determination portion 20. The modeling processing portion 58 includes a nonlinear mapping processing portion 60, a linear filter 62, and a nonlinear mapping processing portion 64. The modeling processing portion 58 performs a modeling process by a Hammerstein-Wiener nonlinear model. The modeling processing portion 58 is provided with the nonlinear mapping processing portion 60, the linear filter 62, and the nonlinear mapping processing portion 64. The modeling processing portion 58 generates a reference noise signal by performing the modeling process with respect to the sine wave outputted from the fundamental wave determination portion 56. The reference noise signal outputted from the modeling processing portion 58 corresponds to a reference signal for removing the noise from the signal including the noise. The reference noise signal is inputted to a noise removal processing portion 66 provided in the postprocessing portion 14. The noise removal processing portion 66 is inputted with a signal including a noise from the processing portion 12. The noise removal processing portion 66 removes the noise from the signal including the noise by the algorithm of the Normalized Least-Mean Square by using the reference noise signal. The noise removal processing portion 66 outputs the signal from which the noise is removed.

Fig. 15 is a view illustrating a signal wave before and after the removal of the noise. A lateral axis indicates a time and a longitudinal axis indicates an amplitude. A signal having a color of gray indicates a state before the removal of the noise. A signal having a color of black indicates a state after the removal of the noise. As seen from Fig. 15, the noise is securely removed.

The postprocessing portion 14 also performs a torsion reduction process. Meanwhile, not only the postprocessing portion 14 performs the noise reduction. A series of process performed by the preprocessing portion 10, the processing portion 12, and the postprocessing portion 14 removes the noise reduction relative to the sound obtained via the microphones 22.

As such, the signal in which the postprocessing is performed by the postprocessing portion 14 is outputted to the automatic voice recognition device which is not illustrated as a voice output. A favorable target sound in which the sound other than the target sound is suppressed is inputted to the automatic voice recognition device, and thus the automatic voice recognition device may enhance the precision of the voice recognition. Based on the voice recognition result by the automatic voice recognition device, for example, the device mounted on the vehicle is automatically operated.

Next, the operation of the voice processing device according to the embodiment will be explained with reference to Fig. 17. Fig. 17 is a flowchart illustrating the operation of the voice processing device of the embodiment.

First, the power supply of the voice processing device is turned ON (Step 1).

Next, the passenger calls to the voice processing device (Step 2). The voice processing starts in response to the call. Here, for example, a case where the driver calls to the voice processing device will be explained as an example. Meanwhile, the driver does not have to call to the voice processing device. For example, the passenger may call to the voice processing device. In addition, the call may be a specific word, or may be merely a voice.

Next, the direction of the voice source 72 from which the call is provided is determined (Step S3). As described above, for example, the voice source direction determination portion 16 determines the direction of the voice source 72.

Next, the directivity of the beamformer is set in response to the direction of the voice source 72 (Step S4). As described above, the adaptive algorithm determination portion 18 and the processing portion 12, for example, set the directivity of the beamformer.

In a case where the sound arriving from the direction range other than a predetermined direction range including the direction of the voice source 72 is equal to or larger than the voice arriving from the voice source 72 (YES in Step S5), the voice source direction determination portion 16 cancels the determination of the voice source 72 (Step S6).

On the other hand, in a case where the sound arriving from the direction range other than the predetermined direction range including the direction of the voice source 72 is not equal to or larger than the voice arriving from the voice source 72 (NO in Step S5), the voice source direction determination portion 16 repeatedly performs Steps S3 and S4.

As such, the beamformer is adaptively set in response to the change of the position of the voice source 72, and the sound other than the target sound is securely suppressed.

As such, according to the embodiment, in a case where the voice source 72 is disposed at the near field, the voice source direction determination portion 16 may highly precisely determine the direction of the voice source 72 even in a case where the voice source 72 is disposed at the near field since the voice is handled as the spherical wave. Since the direction of the voice source 72 may be highly precisely determined, according to the embodiment, the sound other than the target sound may securely be restrained. Furthermore, in a case where the voice source 72 is disposed at the far field, the process load for determining the direction of the voice source 72 may be reduced because the voice source direction determination portion 16 determines the direction of the voice source 72 by handling the voice as a plane wave. Accordingly, according to the embodiment, the favorable voice processing device that may enhance the certainty of the voice recognition may be provided.

In addition, according to the embodiment, the music removal processing portion 24 removing the music included in the sound reception signal is provided, and thus the favorable voice recognition may be performed even in a case where the vehicle-mounted audio device 84 plays the music.

In addition, according to the embodiment, the noise removal processing portion 66 removing the noise included in the sound reception signal is provided, and thus the favorable voice recognition may be performed even when the vehicle runs.

(Modified embodiment)

Various modifications are available other than the above-described embodiment.

For example, according to the aforementioned embodiment, the case where the three microphones 22 are used has been explained, however, the number of the microphones 22 is not limited to three, and may be equal to or greater than four. More microphones 22 are used, higher precisely the direction of the voice source 72 may be determined.

According to the aforementioned embodiment, a case where the output of the voice processing device of the embodiment is inputted to the automatic voice recognition device, that is, a case where the output of the voice processing device of the embodiment is used for the voice recognition, has been explained, however, is not limited thereto. The output of the voice processing device of the embodiment does not have to be used for the automatic voice recognition. For example, the voice processing device of the embodiment may be applied to the voice processing for a conversation over telephone. Specifically, by using the voice processing device of the embodiment, a sound other than a target sound may be suppressed, and the favorable sound may be sent. In a case where the voice processing device of the embodiment is applied to the conversation over telephone, the conversation with a favorable voice may be achieved.

This application claims priority to Japanese Patent Application 2014-263918, filed on December 26, 2014, the entire content of which is incorporated herein by reference to be a part of this application.

EXPLANATION OF REFERENCE NUMERALS

22, 22a to 22c: microphone, 40: driver seat, 42: dash board, 44: passenger seat, 46: vehicle body, 72, 72a, 72b: voice source, 76: speaker, 78: steering wheel, 80: engine, 82: outside noise source, 84: vehicle-mounted audio device

## Claims

**1.** A voice processing device, comprising:

a plurality of microphones disposed in a vehicle;
a voice source direction determination portion determining a direction of a voice source by handling a sound reception signal as a spherical wave in a case where the voice source serving as a source of a voice included in the sound reception signal obtained by each of the plurality of microphones is disposed at a near field, the voice source direction determination portion determining the direction of the voice source by handling the sound reception signal as a plane wave in a case where the voice source is disposed at the far field; and
a beamforming processing portion performing beamforming so as to suppress a sound arriving from a direction range other than a direction range including the direction of the voice source.

**2.** The voice processing device according to claim 1, wherein a number of the plurality of microphones is two.

**3.** The voice processing device according to claim 1, wherein
a number of the plurality of microphones is at least three; and
a first distance serving as a distance between a first microphone of the plurality of microphones and a second microphone of the plurality of microphones is different from a second distance serving as a distance between a third microphone of the plurality of microphones and the second microphone.

**4.** The voice processing device according to one of claims 1 to 3, further comprising:

a music removal processing portion removing a music signal mixed in the sound reception signal by using a reference music signal obtained by an audio device.

**5.** The voice processing device according to one of claims 1 to 4, wherein the voice source direction determination portion cancels the determination of the direction of the voice source in a case where a sound arriving at the microphone from within the second direction range is larger than a sound arriving at the microphone from within the first direction range.

**6.** The voice processing device according to one of claims 1 to 5, further comprising:

a noise removal processing portion performing a removal process of a noise mixed in the sound reception signal.

# F I G. 1

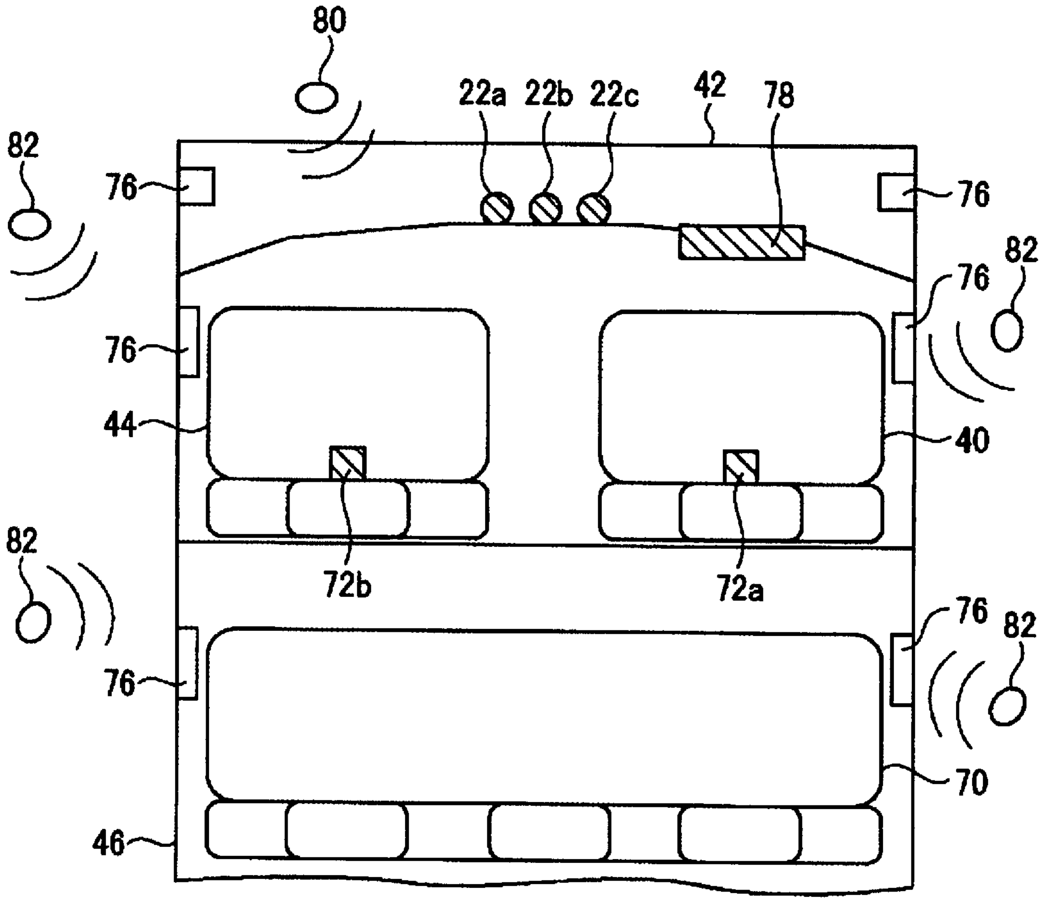

FIG. 2

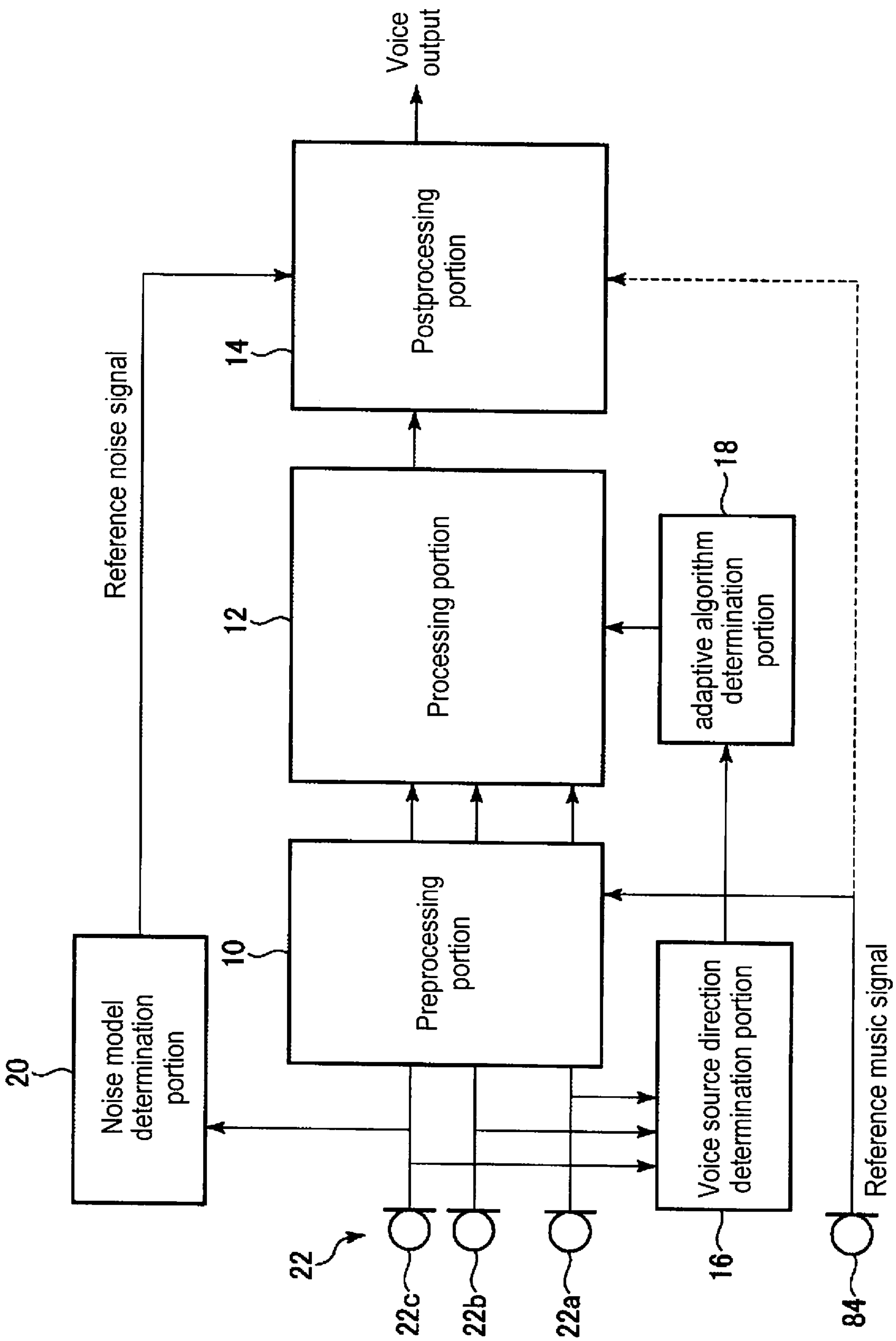
Voice output
Postprocessing portion
14
Reference noise signal
Processing portion
12
18
adaptive algorithm determination portion
Preprocessing portion
10
Noise model determination portion
20
Voice source direction determination portion
16
Reference music signal
84
22
22c
22b
22a

FIG. 3A

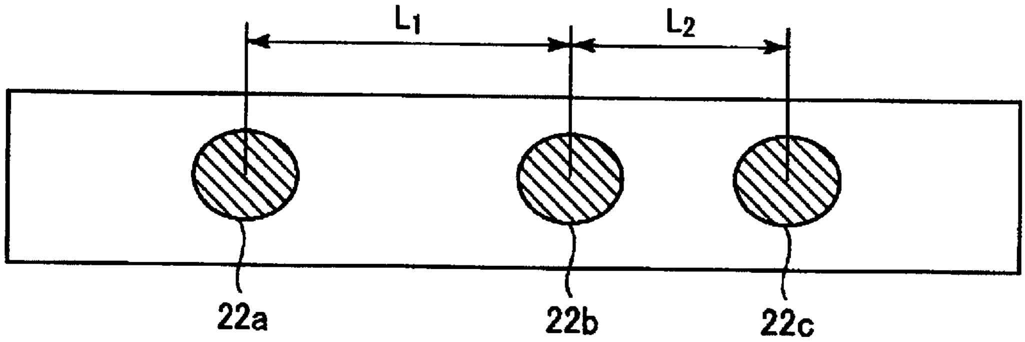


FIG. 3B

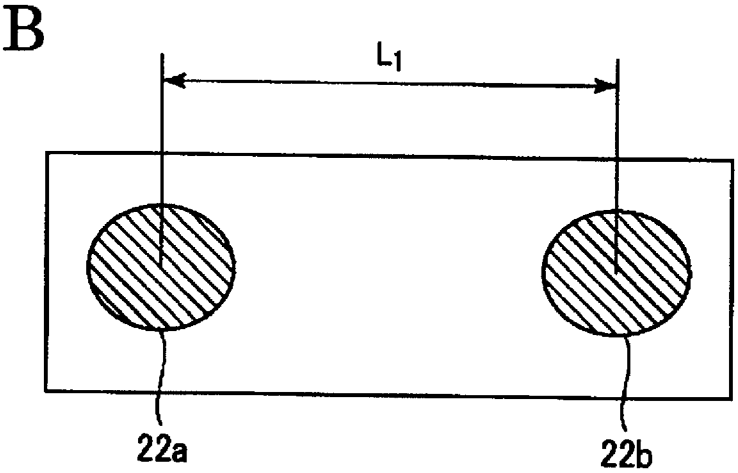


FIG. 4A

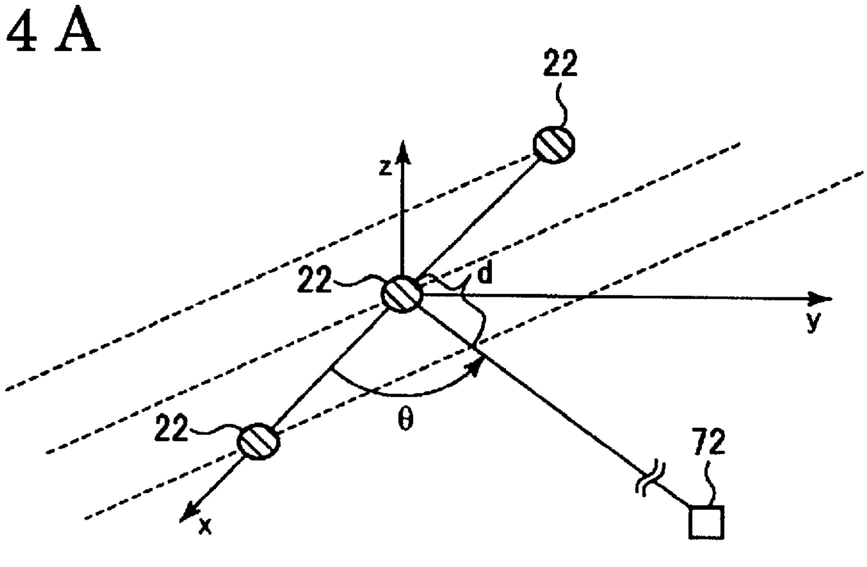

F I G. 4 B

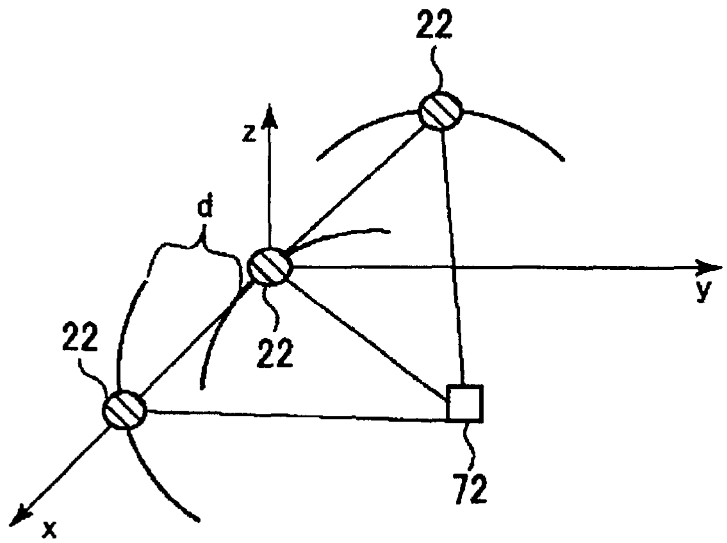
22
z
d
y
22
22
72
x

F I G. 5

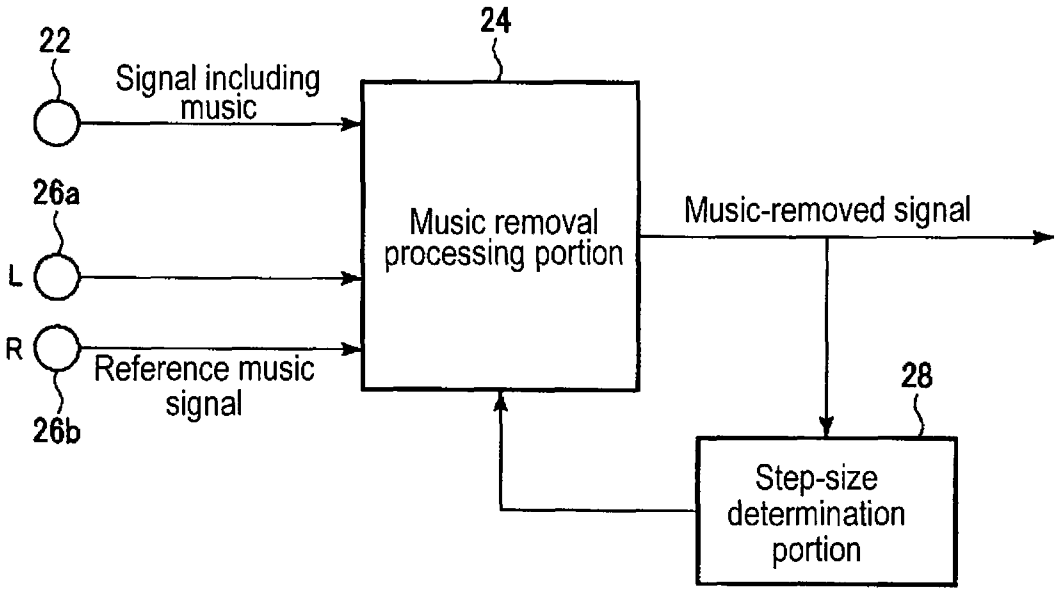
22
Signal including music
24
26a
L
Music removal processing portion
Music-removed signal
R
Reference music signal
26b
28
Step-size determination portion

F I G. 6

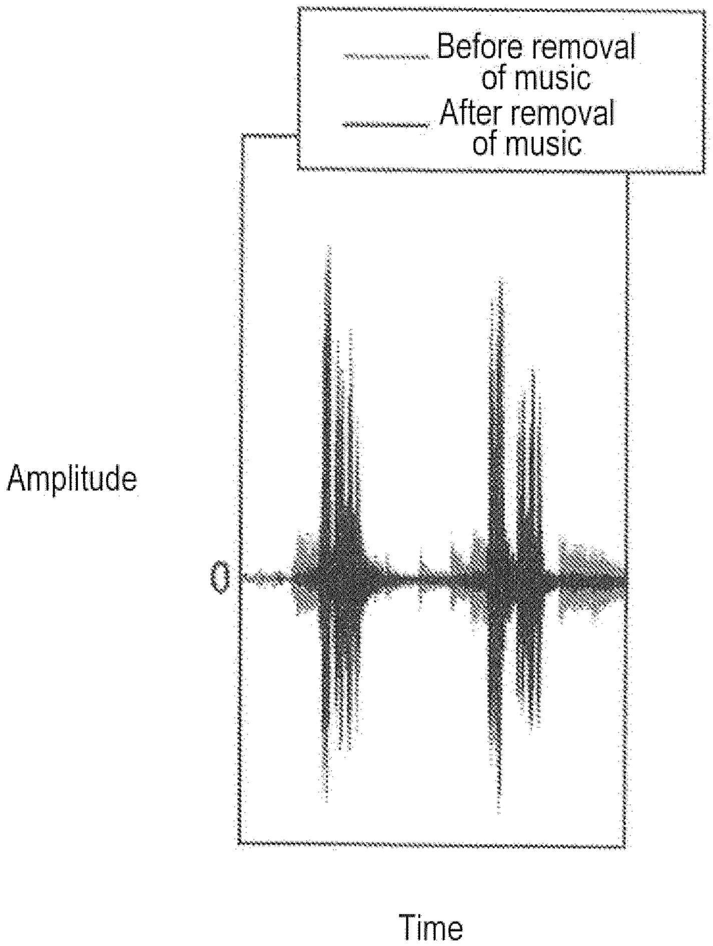
Before removal
of music
After removal
of music
Amplitude
0
Time

FIG. 7

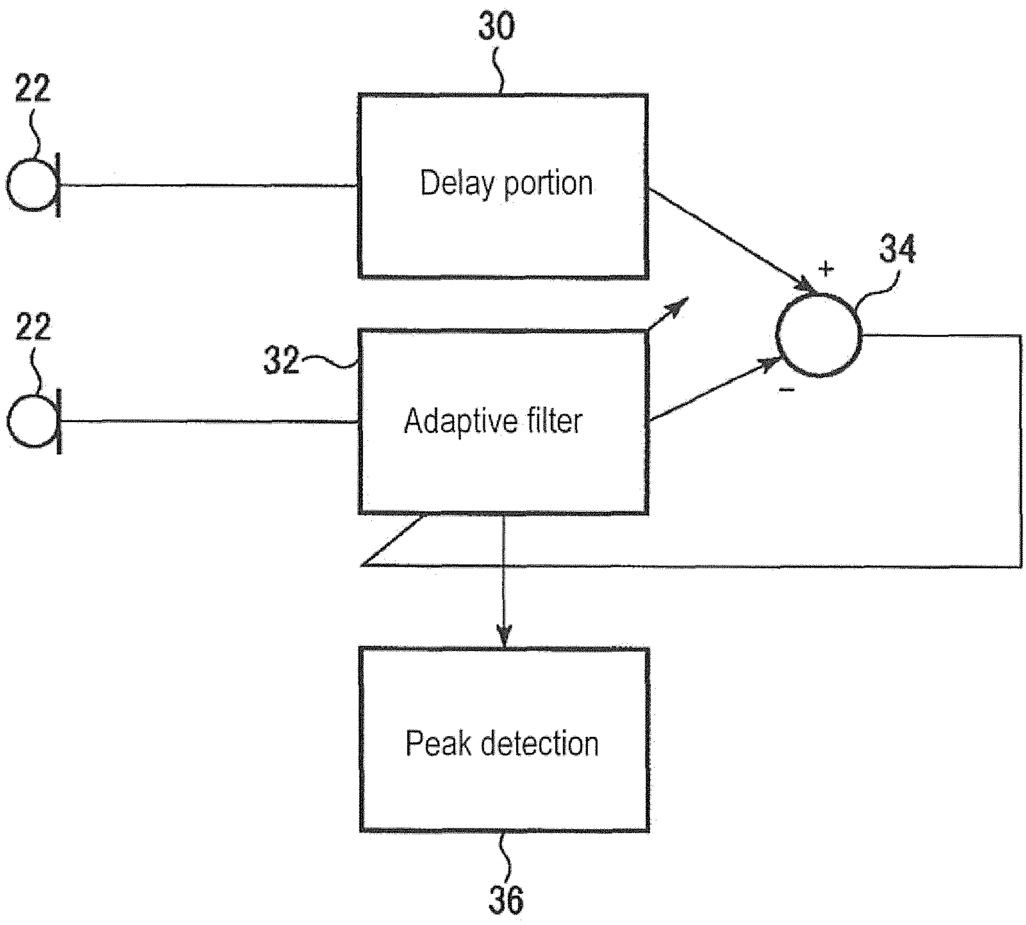
30
22
Delay portion
34
+
22
32
Adaptive filter
−
Peak detection
36

FIG. 8A

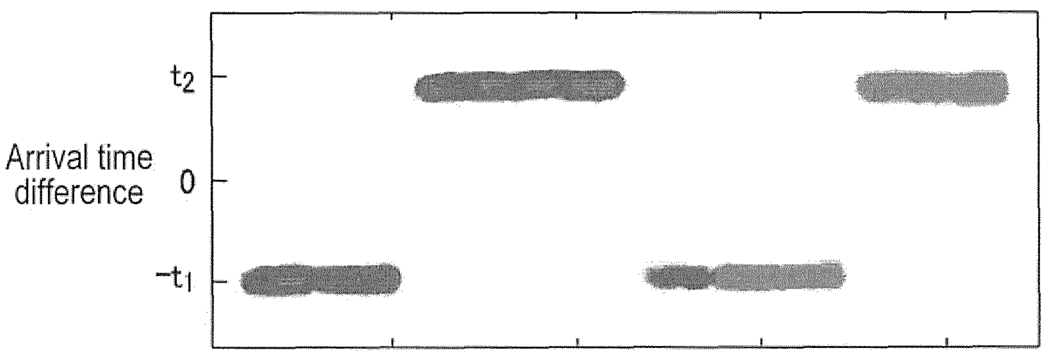
$t_2$
Arrival time difference
0
$-t_1$

FIG. 8B

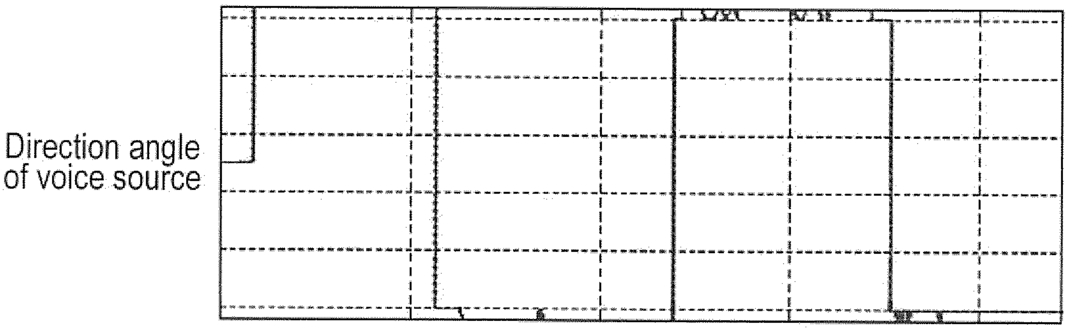


FIG. 8C

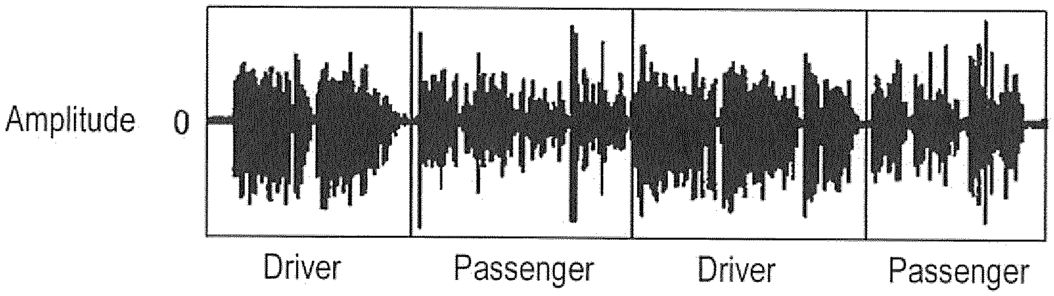


FIG. 9

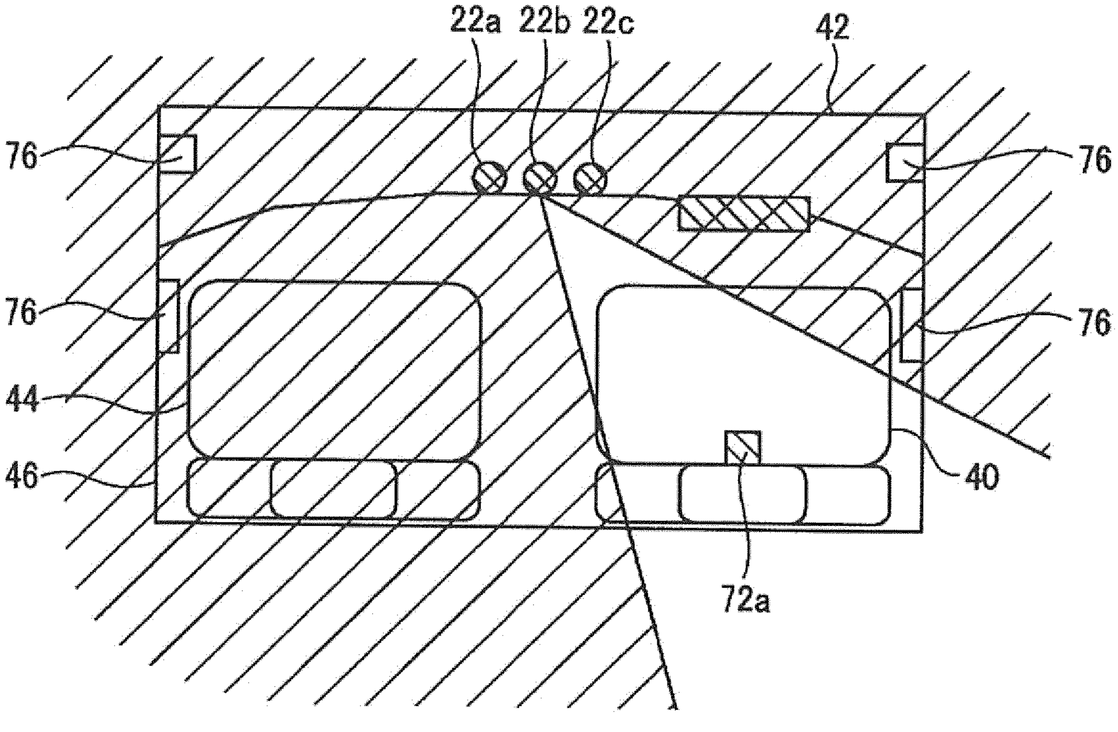

FIG. 10

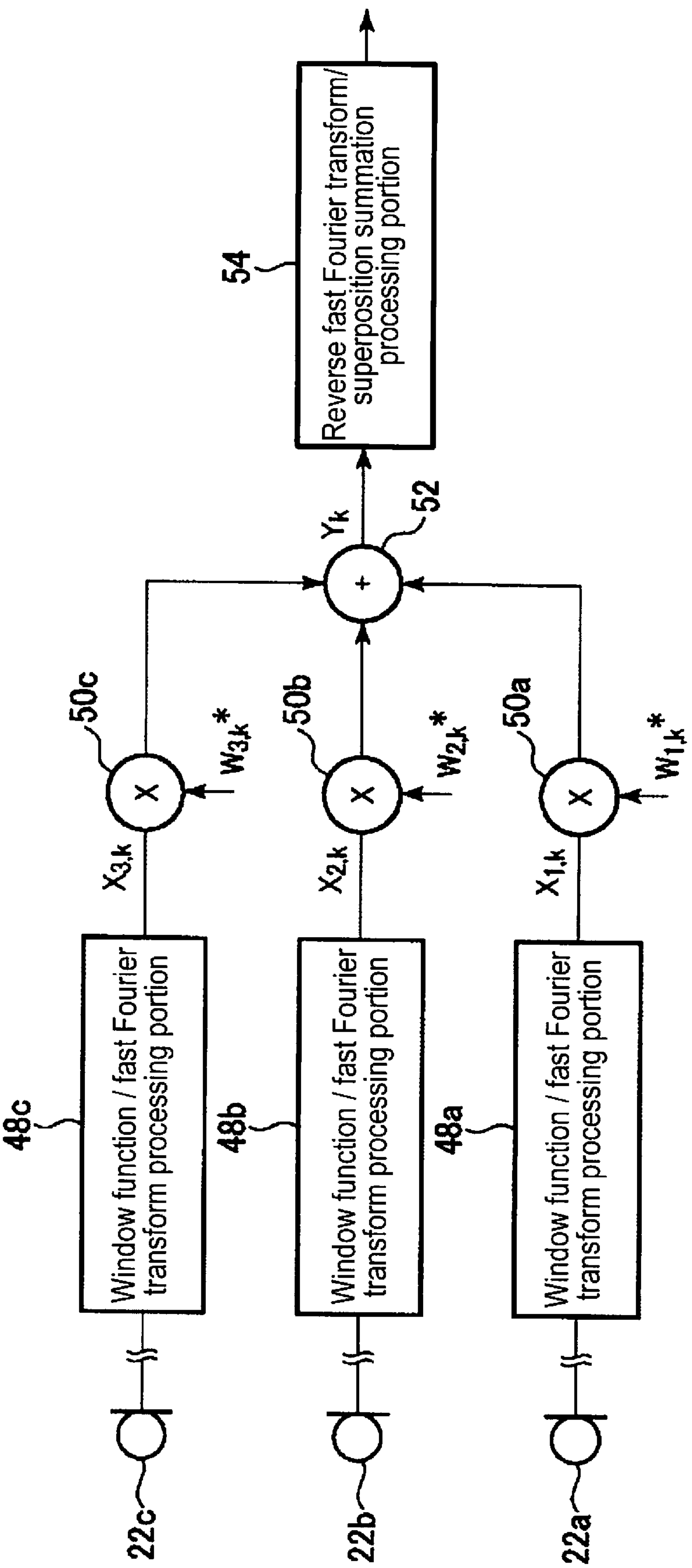
22c
22b
22a
48c
48b
48a
Window function / fast Fourier transform processing portion
Window function / fast Fourier transform processing portion
Window function / fast Fourier transform processing portion
X3,k
X2,k
X1,k
50c
50b
50a
W3,k*
W2,k*
W1,k*
52
Yk
54
Reverse fast Fourier transform/ superposition summation processing portion

# FIG. 11

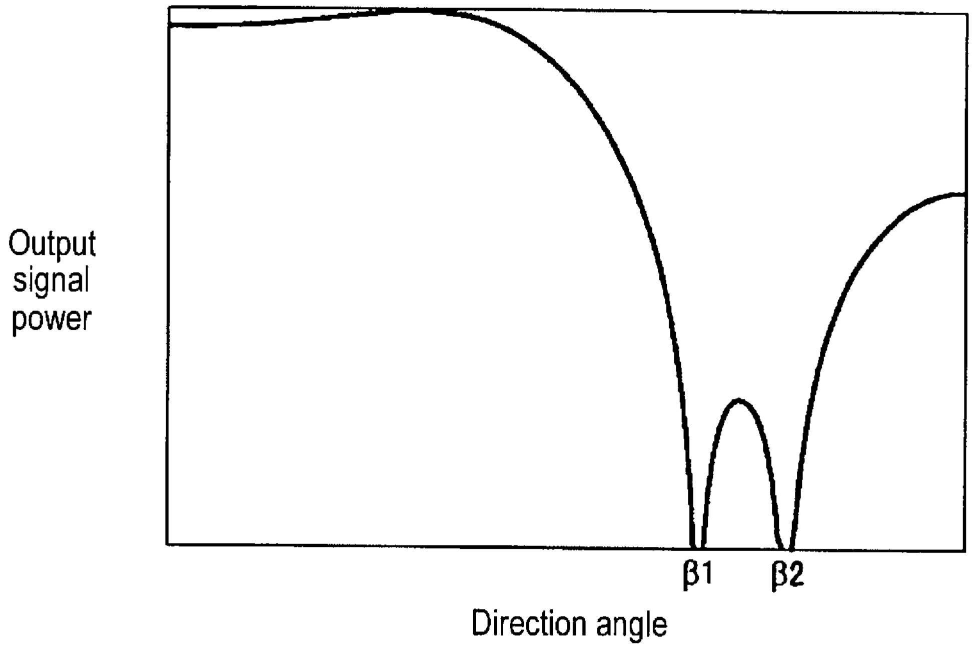
Output
signal
power
β1
β2
Direction angle

# FIG. 12

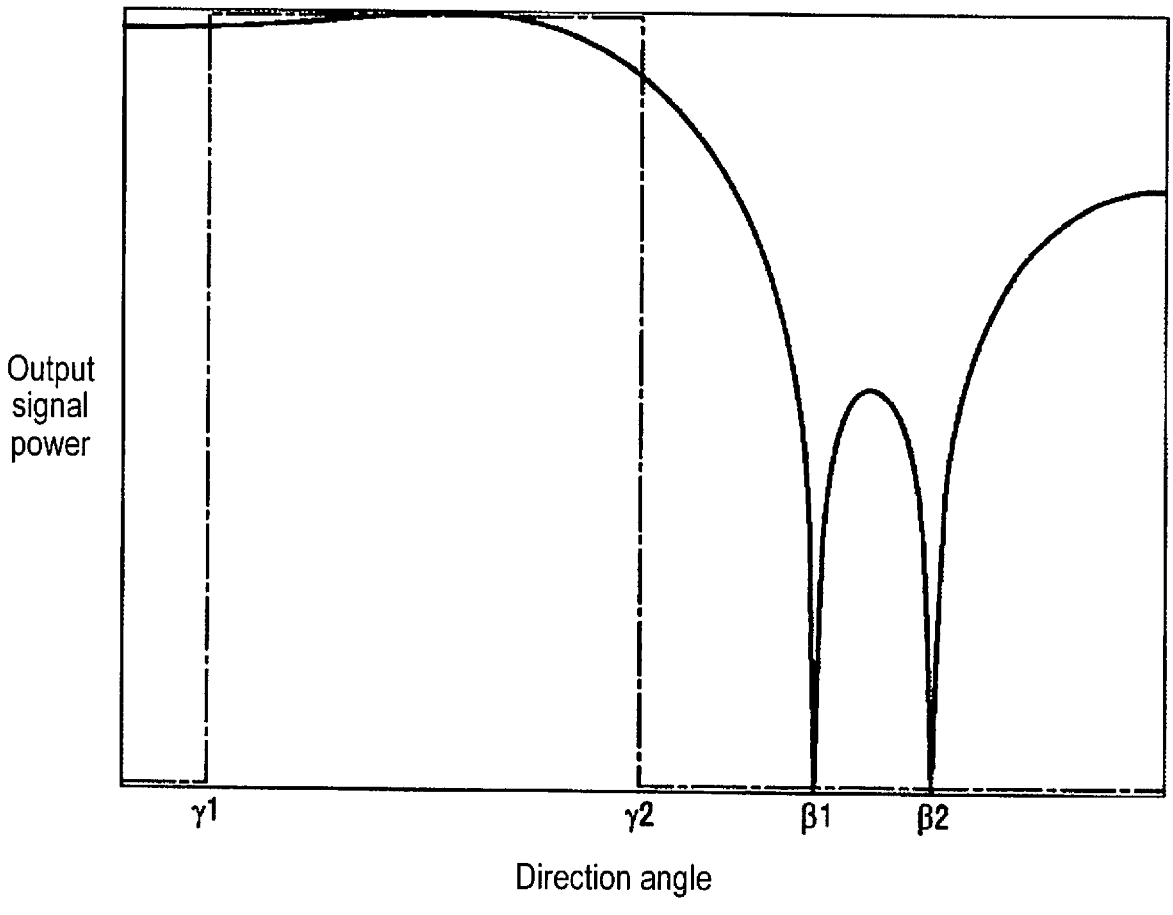
Output
signal
power
γ1
γ2
β1
β2
Direction angle

F I G. 13

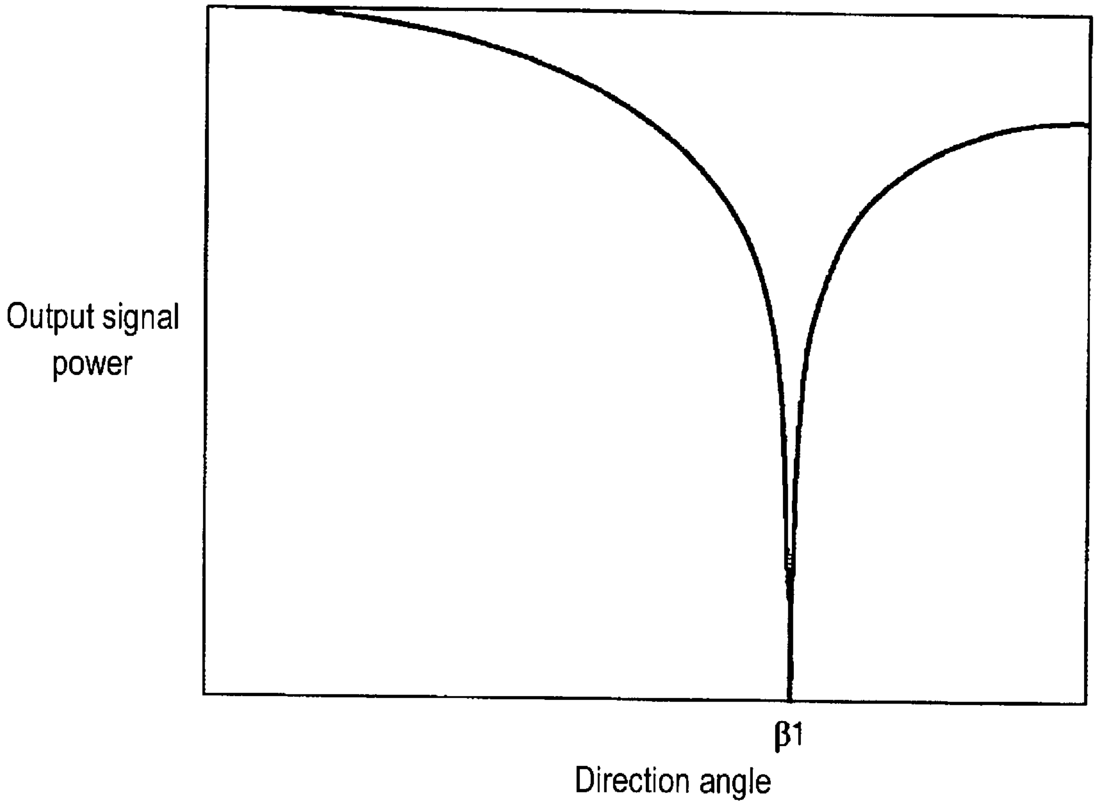

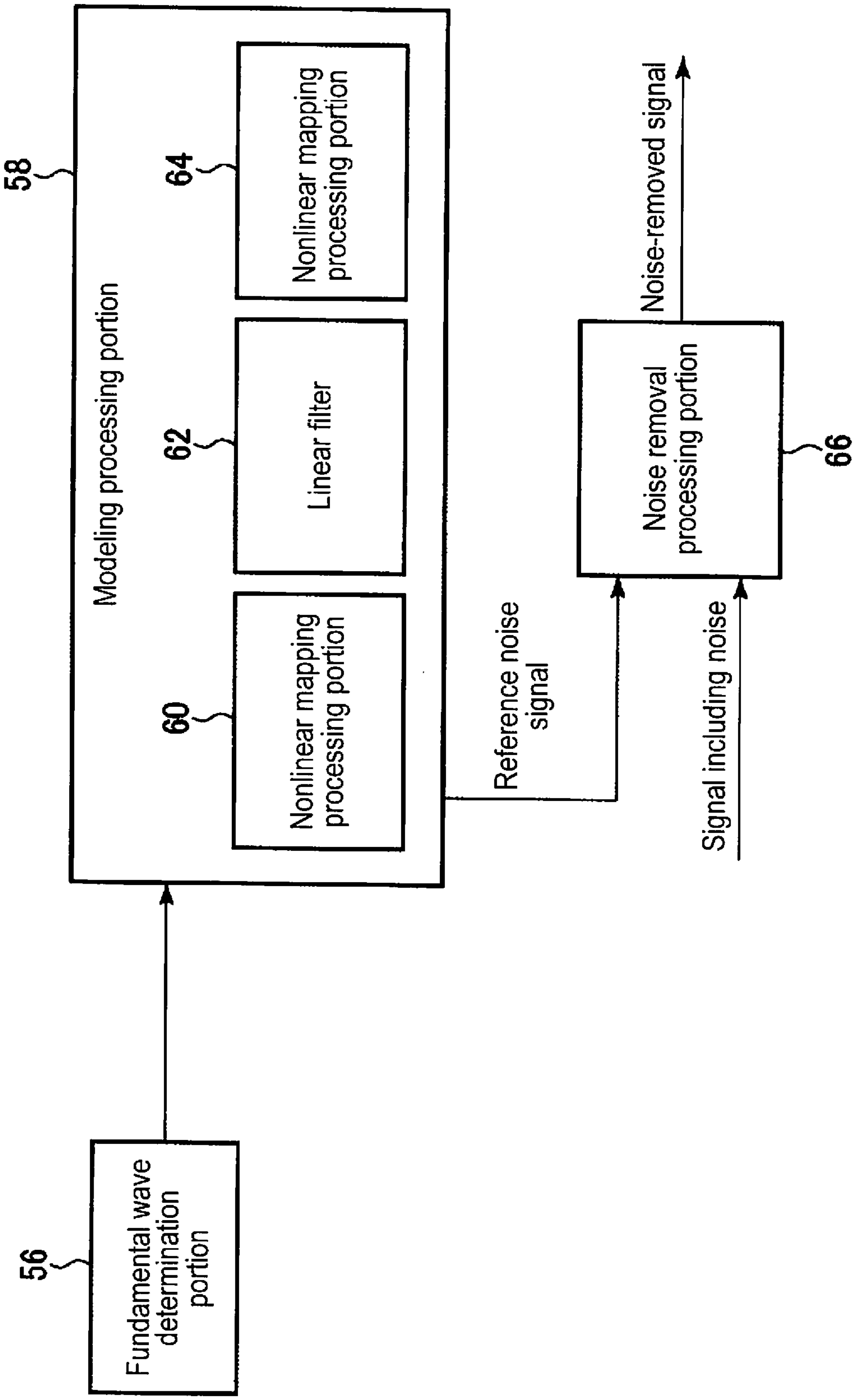
56
Fundamental wave determination portion
58
Modeling processing portion
60
Nonlinear mapping processing portion
62
Linear filter
64
Nonlinear mapping processing portion
Reference noise signal
66
Noise removal processing portion
Signal including noise
Noise-removed signal

FIG. 14

FIG. 15

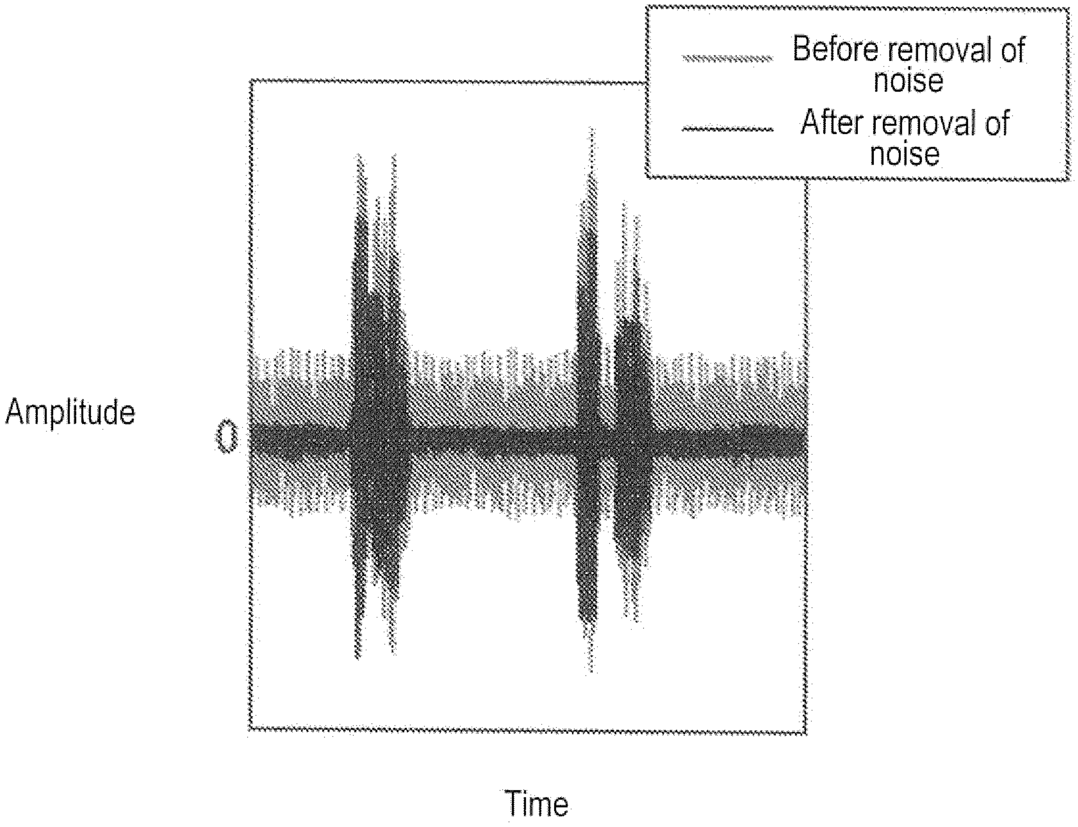
Before removal of noise
After removal of noise
Amplitude
0
Time

F I G. 16

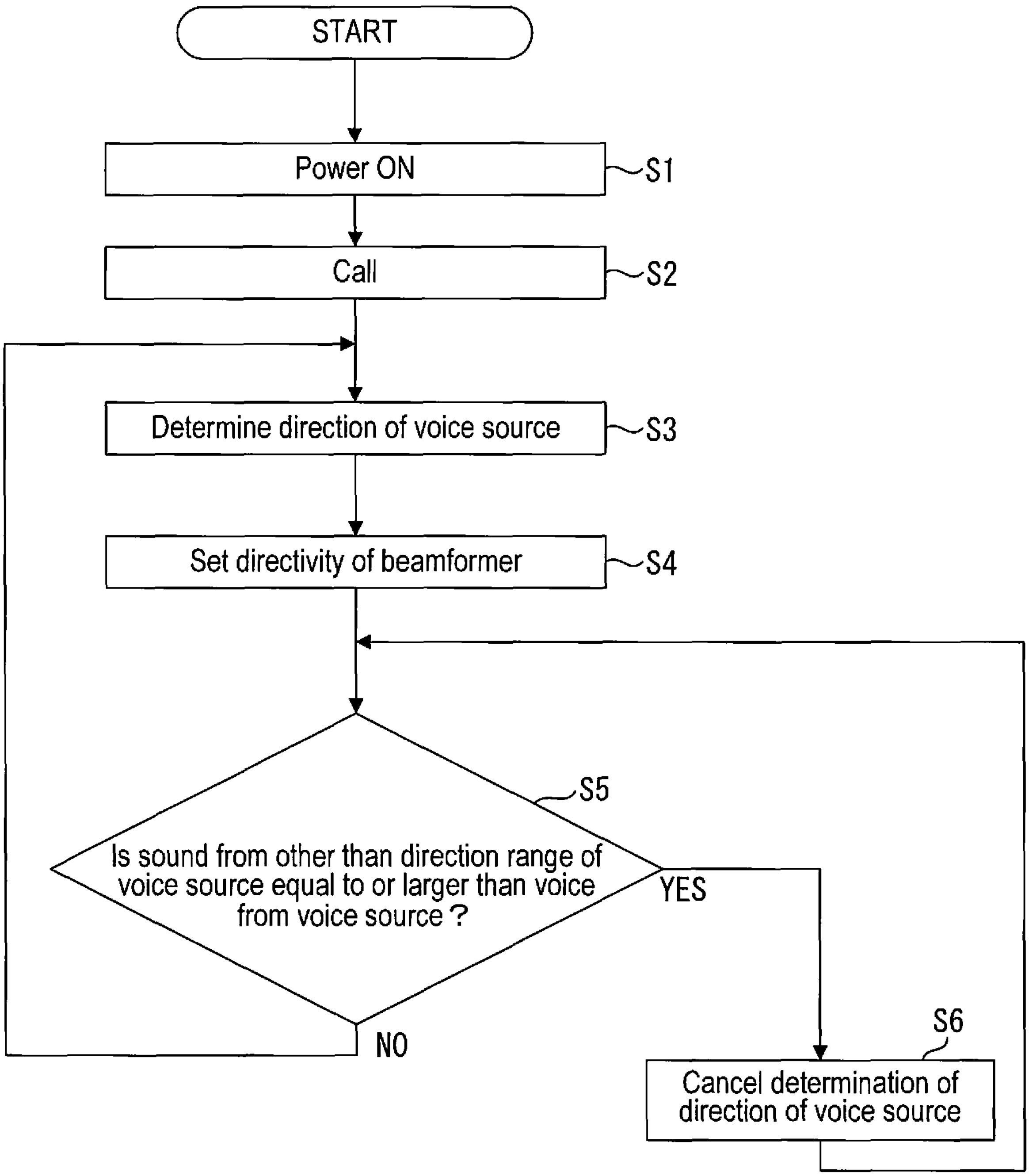
START
Power ON
S1
Call
S2
Determine direction of voice source
S3
Set directivity of beamformer
S4
S5
Is sound from other than direction range of voice source equal to or larger than voice from voice source ?
YES
NO
S6
Cancel determination of direction of voice source

**INTERNATIONAL SEARCH REPORT**

International application No.
PCT/JP2015/006446

A. CLASSIFICATION OF SUBJECT MATTER
*H04R3/00*(2006.01)i, *G10L15/20*(2006.01)i, *G10L15/28*(2013.01)i, *H04R1/02*(2006.01)i, *H04R1/40*(2006.01)i, *G10L15/00*(2013.01)n

According to International Patent Classification (IPC) or to both national classification and IPC

B. FIELDS SEARCHED

Minimum documentation searched (classification system followed by classification symbols)
H04R3/00, G10L15/20, G10L15/28, H04R1/02, H04R1/40, G10L15/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 11-234790 A (Fujitsu Ltd.), 27 August 1999 (27.08.1999), paragraphs [0015] to [0020], [0028] to [0049], [0100], [0117] to [0151]; fig. 1, 9, 17 & US 6618485 B1 column 2, line 50 to column 3, line 63; column 6, line 30 to column 8, line 55; column 13, lines 55 to 59; column 15, line 26 to column 19, line 2; fig. 1, 9, 17 & US 2003/0179890 A1 | 1,2<br>3-6 |
| Y | JP 2008-92512 A (Casio Hitachi Mobile Communications Co., Ltd.), 17 April 2008 (17.04.2008), paragraphs [0020] to [0023]; fig. 1, 5 (Family: none) | 3-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 March 2016 (14.03.16) | 22 March 2016 (22.03.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2015/006446

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2014-11600 A (Audio-Technica Corp.), 20 January 2014 (20.01.2014), paragraph [0018]; fig. 1 (Family: none) | 3-6 |
| Y | JP 2000-231399 A (Oki Electric Industry Co., Ltd.), 22 August 2000 (22.08.2000), paragraphs [0006] to [0013] (Family: none) | 4-6 |
| Y | JP 2014-178339 A (NEC Corp.), 25 September 2014 (25.09.2014), paragraph [0062] & WO 2012/165657 A1 | 5,6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012215606 A
- JP 2012189906 A
- JP 2012042465 A
- JP 2014263918 A